Europäisches Patentamt

European Patent Office

Office européen des brevets

(11) Publication number: **0 408 365 A2**

# EUROPEAN PATENT APPLICATION

(21) Application number: **90307643.8**

(22) Date of filing: **12.07.90**

(51) Int. Cl.5: **H02J 7/10**

(30) Priority: **13.07.89 US 379080**

(43) Date of publication of application:
**16.01.91 Bulletin 91/03**

(84) Designated Contracting States:
**AT BE CH DE DK ES FR GB GR IT LI LU NL SE**

(71) Applicant: **Yang, Tai-Her**
**PO Box 84-85**
**Taipei(TW)**

(72) Inventor: **Yang, Tai-Her**
**PO Box 84-85**
**Taipei(TW)**

(74) Representative: **Arthur, Bryan Edward et al**
**4 Dyers Buildings Holborn**
**London, EC1N 2JT(GB)**

(54) Battery charger.

(57) A battery charger having an automatic control for reducing the battery charging current as the battery nears full charge. The automatic control comprises a control circuit that includes a normally-closed temperature sensitive switch and an electromagnetic relay connected in series with the battery and a current source. In a first embodiment, the relay has a relatively low resistance coil and normally-open contacts. The control circuit comprises a parallel circuit in which the switch and relay contacts are connected in series across a parallel connected current limiting resistor and start-up capacitor. The relay coil is connected in series with the parallel circuit. In a second embodiment, the relay has a relatively high resistance coil and normally-closed contacts. The control circuit comprises a parallel circuit in which the switch and relay contacts are connected in series across the relay coil.

EP 0 408 365 A2

# BATTERY CHARGER

## Field of the Invention

The present invention relates to battery chargers. More particularly, it relates to a battery charger having a thermally responsive control for automatically limiting the charging current when a temperature rise of the battery indicates that the battery has attained full charge.

## Background of the Invention

Prior battery chargers designed to charge a storage battery fully without damage to the battery have employed complex controls, such as ampere-hour meters, intricate voltage sensing circuits, and specific gravity meters for sensing the specific gravity of the battery electrolyte. There is a need for an automatically controlled battery charger which is simple in construction and inexpensive to manufacture.

It is an object of the invention to provide an automatically controlled charger for storage batteries which is simple in construction, which utilizes a minimum number of low cost components and which is low in cost of manufacture.

It is another object of the invention to provide an automatically controlled charger for storage batteries which provides a relatively high charging current during the initial phase of battery charging and which limits the charging current to a relatively low value during the final phase of battery charging.

It is still another object of the invention to provide an automatically controlled battery charger that includes means for sensing a temperature rise of the battery to cause the charging current to be limited to a relatively low value during the final phase of battery charging.

## Summary of the Invention

Briefly, the charger of the invention comprises a d.c. source of charging current having one pole thereof connected to a like pole of the battery to be charged. The opposite pole of the battery is connected through a charger control circuit to the like opposite pole of the d.c. source.

In a first embodiment of the invention, the charger control circuit includes a relay having a low resistance coil and a pair of normally-open contacts. The relay coil is connected in series with a relatively high value, current limiting resistor and the series connected relay coil and resistor are connected between a pole of the battery and a pole of the d.c. source. A temperature sensitive switch is connected in series with the contacts of the relay and the series connected switch and relay contacts are connected in parallel with the current limiting resistor and a start-up capacitor. The temperature sensitive switch is arranged to sense the temperature rise of the battery under charge.

At start-up, the temperature sensitive switch is closed and the relay contacts are open. Upon application of charging current from the source, the start-up capacitor passes a surge of current through the relay coil, causing the relay contacts to close and complete a short circuit across the current limiting resistor. Then the charging current is limited only by the resistance of the relay coil, which resistance is designed to be such as to limit the charging current to a safe value for the initial phase of the battery charge. As the battery nears full charge, the temperature of the battery rises, causing the switch to open and remove the short circuit from across the current limiting resistor. The current through the relay coil is then insufficient to hold the relay contacts closed. When the battery temperature falls as a result of the reduced charging current and the temperature switch again closes, the relay contacts nevertheless remain open, thereby preventing reapplication of the high charging current to the battery.

In a second embodiment of the invention, the charger control circuit includes a relay having a coil of relatively high resistance and normally closed contacts. A normally-closed temperature sensitive switch is connected in series with the relay contacts and the series combination is connected in parallel with the relay coil. The circuit between the charging current source and the battery is completed through the parallel connected relay coil and switch-relay contact combination. Initially, the battery charging current is limited by the internal resistance of the battery and the voltage of the charging current source. As the battery nears full charge, the battery temperature rise causes the switch to open and remove the short circuit from across the relay coil. The battery charging current then flows through the relay coil and is limited to a relatively low value by the resistance of the relay coil. When the battery temperature drops as a result of the lower charging current and the switch recloses, the switch relay contact circuit remains open, since the relay is then energized, and the charging current continues to be limited to a relatively low value, suitable for finishing the battery charge and for maintaining a trickle charge to the battery.

## Description of the Drawings

Fig. 1 is a block diagram of the automatically controlled battery charger of the invention;
Fig. 2 is a schematic diagram of a first embodiment of the invention in which the charger control circuit includes a relay having a relatively low resistance coil and normally-open contacts; and
Fig. 3 is a schematic diagram of a second embodiment of the invention in which the charger control circuit includes a relay having a relatively high resistance coil and normally-closed contacts.

## Detailed Description of the Invention

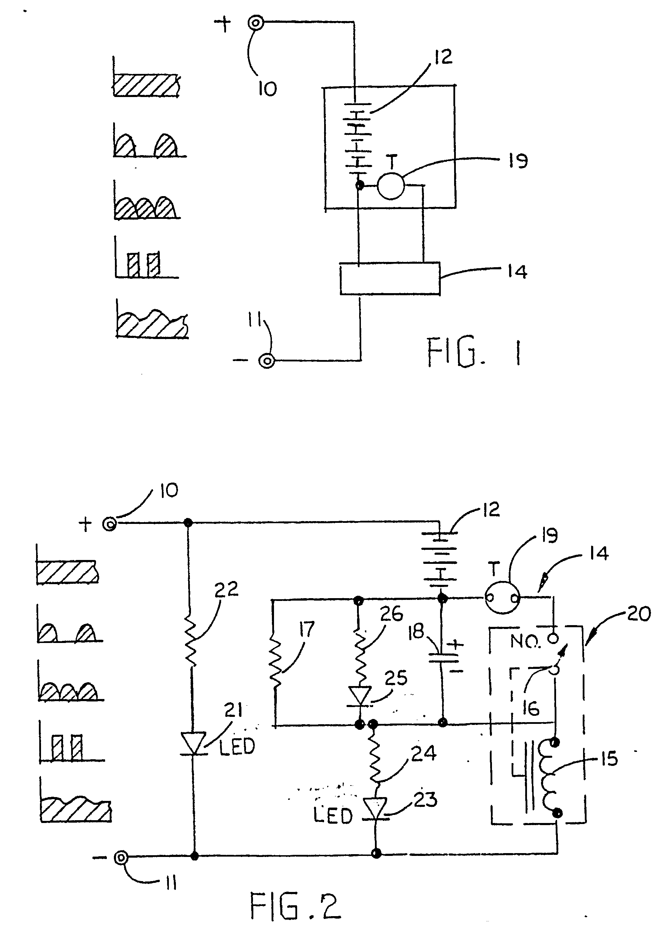

Fig. 1 is a block diagram of the battery charger of the invention. Charging current from a suitable source (not shown) is supplied at terminals 10 and 11. The source may supply direct current at constant voltage, half or full wave rectified a.c., pulsed d.c. or partially filtered rectified a.c., as will be understood. The positive pole of the battery 12 to be charged is connected to the positive terminal 10 of the current source. One end of a control circuit 14 is connected to the negative pole of battery 12 and the opposite end of circuit 14 is returned to the negative terminal of the current source. A temperature sensitive switch 19 is connected to control circuit 14 to control the action of circuit 14. Control circuit 14 initially presents a relatively low resistance to the flow of charging current from the source through the battery 12. When switch 19 senses the temperature rise of the battery that occurs as the battery nears full charge, switch 19 causes circuit 14 to change from a relatively low resistance state to a relatively high resistance state, thereby limiting the current flow through the battery to a relatively low value, of the order of 10-15% of the initial battery charging current. Switch 19 may be, but seldom is, included as an integral part of battery 12. If switch 19 is separate from the battery 12, it is positioned in intimate thermal contact with the battery so as to sense a temperature rise of the battery.

Fig. 2 is a schematic diagram of a first practical embodiment of the invention. Control circuit 14 includes a three branch parallel circuit, one branch of which comprises a normally-closed temperature sensitive switch 19 connected in series with the normally-open contacts 16 of an electromagnetic relay 20. The second and third branches of the parallel circuit respectively comprise a current limiting resistor 17 and a start-up capacitor 18. One end of the parallel circuit is connected to the negative pole of battery 12 and the opposite end thereof is connected through the coil 15 of relay 20. The terms "normally-open" and "normally-closed", as used herein with reference to the contacts of a relay, indicate the status of the relay contacts when the relay coil is not energized.

Switch 19 is closed at normal ambient temperature and open in response to a temperature rise of battery 12. The resistance of relay coil 15 is comparatively low, but sufficiently high to limit the initial charging current through battery 12 to a safe value.

When power is first applied to the circuit of Fig. 2, switch 19 is closed and contacts 16 are open. Current flows from terminal 10 of the source through the battery 12, resistor 17 and coil 15 to terminal 11. Under stable conditions with contacts 16 open, resistor 17 would limit the current flow through the battery and coil 15 to a value inadequate to cause closure of the contacts 16. However, capacitor 18 is completely discharged at start-up and upon the first application of voltage thereto, a surge of current passes through the capacitor and coil 15, causing contacts 16 to close. Thereafter, a relatively high charging current flows from terminal 10, through battery 12, switch 19, contacts 16 and coil 15 to terminal 11, maintaining contacts 16 closed. When a temperature rise of the battery signals that the battery is approaching full charge, switch 19 opens, thereby inserting resistor 17 in series with coil 15 and causing the relay contacts 16 to open. As long as power is continuously applied to the circuit, capacitor 18 retains a charge so that a reclosing of switch 19 upon a subsequent fall in battery temperature does not result in reclosure of the relay contacts 16 and the current through the battery will continue to be limited by resistor 17.

Light emitting diode (LED) 21, together with dropping resistor 22, is connected between terminals 10 and 11 to indicate that power is being applied from the source to the charger. LED 23 and dropping resistor 24, connected across coil 15 senses the higher voltage drop across the coil that occurs when contacts 16 are closed to indicate that a high charging current is being applied to the battery. LED 25 and dropping resistor 26, connected across resistor 17, indicates that low charging current is being applied to the battery.

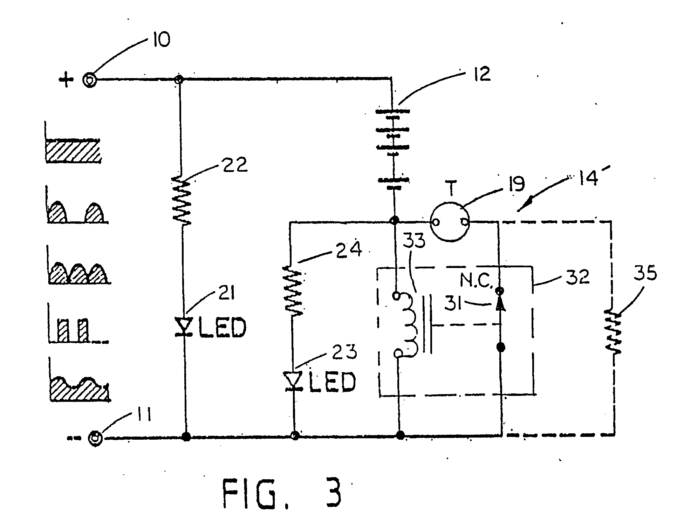

Fig. 3 shows a second embodiment of the charger of the invention. The control circuit of the second embodiment differs primarily from that of Fig. 2 in the use of a relay having a relatively high resistance coil and normally-closed contacts. Charging current is supplied from a source (not shown) to terminals 10 and 11. The positive pole of a battery 12 to be charged is connected to the positive terminal 10 of the source. The negative pole of battery 12 is connected to one side of a control circuit 14. The opposite side of control circuit 14, is connected to the negative terminal 11 of the source. Control circuit 14, is a two-branch parallel circuit, one branch of which comprises a normally-closed temperature sensitive switch 19, similar to switch 19 of Fig. 2, connected in series with the normally-closed contacts 31 of a relay 32. The other branch of circuit 14, comprises the coil 33 of relay 32. The coil 33 of relay 32 is designed to have a relatively high resistance so as to limit the current through battery 12 during the finishing phase of battery charging and for maintenance of a trickle charge thereto to a relatively low value, of the order of 10-15% of the initial charging current. In certain instances, it may be desirable to connect an auxiliary resistor 35 in parallel with the relay contacts 31 in order to increase the current through the battery during the finishing charge and trickle charge phases of operation.

When the battery 12 is first placed under charge, switch 19 is closed and contacts 31 are closed, thereby short circuiting relay coil 33. The charging current through the battery is then limited only by the internal resistance of the battery and the voltage of the charging current source. As the battery nears full charge, the battery temperature rises and switch 19 opens, thereby removing the short circuit from across relay coil 33. Relay 32 becomes energized and contacts 31 are opened. The current through the battery is then limited to a relatively low value by the resistance of coil 33. When the temperature of the battery falls as a result of the reduced current therethrough and switch 19 recloses, contacts 31 remain open, since relay coil 33 continues to be energized.

If resistor 35 is present, the operation of the embodiment of Fig. 3 differs slightly from that just described. When a temperature rise of the battery causes switch 19 to open and relay coil 33 becomes energized, current through the battery is limited to a first low value by the resistance of coil 33 alone. When the temperature of the battery falls and switch 19 recloses, contacts 31 remain open and resistor 35 is then effectively connected in parallel with relay coil 33. The current through the battery is then limited to a second low value, higher than the first low value, by the parallel resistance of coil 33 and resistor 35.

As in Fig. 2, LED 21 and dropping resistor 22, connected between terminals 10 and 11 of the source, indicates by illumination of the LED that power is being applied to the charger. Likewise, LED 23 and dropping resistor 24, connected across the coil 33 of relay 32, indicates by illumination of the LED that a low value charging current is being applied to the battery.

Obviously, variations in the invention are possible in the light of the above teachings. It is to be understood that the invention may be practiced otherwise than as specifically disclosed without departing from the spirit and scope of the appended claims.

## Claims

1. A battery charger having an automatic control for reducing the battery charging current as the battery nears full charge, comprising:
a source of direct current having first and second terminals of opposite polarities;
a battery having first and second poles of opposite polarities connected to said source,
said first pole of said battery being connected to said first terminal of said source,
said first pole and said first terminal having like polarities;
a control circuit having first and second circuit ends,
said first end of said control circuit being connected to said second pole of said battery,
said second end of said control circuit being connected to said second terminal of said source;
said control circuit including:
a temperature sensitive switch having a first pair of contacts,
said switch being responsive to a temperature rise of said battery to actuate said first pair of contacts;
an electromagnetic relay having a coil and a second pair of contacts,
said second pair of contacts of said relay being connected in series with said first pair of contacts of said switch; and
means connected in parallel with said series connected first and second pairs of contacts for limiting current through said battery and said control circuit to a relatively low value;
said relay being responsive to actuation of said switch to cause said second pair of contacts of said relay to change position and thereby cause said current limiting means to limit said current.

2. A battery charger as claimed in claim 1 wherein:
said first pair of contacts of said temperature sensitive switch are normally closed,
said second pair of contacts of said relay are normally open,
said current limiting means comprises a resistor, and
said coil of said relay is of a relatively low resistance value;

said resistor having one end connected to one end of said series connected first pair of contacts of said switch and said second pair of contacts of said relay to form a first common connection, the opposite end of said resistor being connected to the opposite end of said series connected first and second pairs of contacts to form a second common connection, one end of said relay coil being connected to said second common connection, said first common connection constituting said first end of said control circuit, the end of said relay coil opposite said one end thereof constituting said second end of said control circuit.

3. A battery charger as claimed in claim 2, with additionally:
a start-up capacitor connected between said first and second common connections in parallel with said resistor and said series connected first and second contact pairs.

4. A battery charger as claimed in claim 1, wherein:
said first pair of contacts of said temperature sensitive switch are normally closed,
said second pair of contacts of said relay are normally closed, and
said coil of said relay is of a relatively high resistance;
one end of said series connected first pair of contacts of said switch and said second pair of contacts of said relay being connected to one end of said relay coil to form a first common connection,
the opposite end of said series connected first and second pairs of contacts being connected to the end of said relay coil opposite said one end thereof to form a second common connection,
said coil of said relay comprising said means for limiting current,
said first common connection comprising said first end of said control circuit, and
said second common connection comprising said second end of said control circuit.

FIG. 1

FIG.2

FIG. 3